# EUROPEAN PATENT APPLICATION

(11) **EP 3 254 907 A1**
(43) Date of publication of application: **13.12.2017**
(21) Application number: 16173041.1
(22) Date of filing: 06.06.2016
(51) Int. Cl.: B60R 22/46

(54) **A BELT RETRACTOR FOR A VEHICLE SAFETY BELT SYSTEM AND METHOD OF USING SUCH BELT RETRACTOR**

(71) Applicant: TRW Automotive GmbH, 73553 Alfdorf (DE); TRW Polska Sp.z.o.o., 42-200 Czestochowa (PL)
(72) Inventor: Krukowski, Krzysztof, 42-200 Cz stochowa (PL)
(74) Representative: ZF TRW Patentabteilung

(57) **Abstract**

A belt retractor (10) for a vehicle safety belt system comprises a belt tensioner for tensioning a safety belt during a tensioning phase, and a load limiter for limiting the load applied by the safety belt on a vehicle occupant during a load limiting phase after the tensioning phase. The belt tensioner includes a belt reel (14), a toothed pinion (22), a drive unit (16) and an elongated load transmission element (20). The pinion (22) is coupled to the belt reel (14). The load transmission element (22) has a first portion (28) exposing a plastically deformable material and a second portion (30) exposing an elastically deformable material. According to a method of using such a belt retractor (10), during the belt tensioning phase the drive unit (16) moves the load transmission element (20) in a tensioning direction (A) so that the first portion (28) of the load transmission element (20) engages the teeth of the pinion (22) so as to rotate the pinion (22) and the belt reel (14) in a winding direction (B) before the second portion (30) of the load transmission element (20) comes into contact with the teeth of the pinion (22). During the load limiting phase the belt reel (14) rotates the pinion (22) in an unwinding direction opposite to the winding direction (B) while the second portion (30) of the load transmission element (20) is in contact with the teeth of the pinion (22).

## Description

The invention relates to a belt retractor for a vehicle safety belt system. In particular, the invention relates to a belt retractor comprising a belt tensioner for tensioning a safety belt during a tensioning phase, and a load limiter for limiting the load applied by the safety belt on a vehicle occupant after the tensioning phase during a load limiting phase. The invention further relates to a method of using a belt retractor of the before-mentioned kind.

A belt tensioner is intended to tension the safety belt in case of a crash so that the vehicle occupant takes part as quickly as possible in the overall deceleration of the vehicle. By tensioning the safety belt especially the negative effects of the so-called film spool effect (belt webbing loosely rolled on the belt reel) and belt slack (webbing that is not in close contact with the vehicle occupant), which impede the restraint of the vehicle occupant, are reduced.

A load limiter provides that the load of the safety belt acting on the vehicle occupant after tensioning of the safety belt does not excessively increase. In order to relieve the vehicle occupant, after locking the belt reel the belt reel is nevertheless allowed to rotate in the unwinding direction (opposite to the winding direction), the rotation being decelerated, however, by energy conversion, i.e. by performing work (e.g. twisting a torsion rod).

A particular type of a belt retractor, which became known from published German patent application DE 10 2006 031 359 A1, uses a deformable load transmission element instead of a linearly moving toothed rack for tensioning the safety belt. The deformable load transmission element is accommodated in a space-saving curved tube and can be moved by activation of a drive unit towards a toothed pinion coupled to the belt reel. The deformable load transmission element rotates the pinion so that the belt reel is rotated in a winding direction. The deformable load transmission element engages the teeth of the pinion relatively softly and smoothly, thus avoiding the rough tooth on tooth contact of common rack-and-pinion tensioners. Variants of this type of belt retractor are shown, inter alia, in DE 10 2010 051 418 A1, DE 10 2010 051 419 A1, DE 10 2010 051 420 A1, DE 10 2010 051 422 A1 and DE 10 2010 051 463 A1.

A further belt retractor of the type described before is known from DE 10 2011 016 153 A1. The deformable load transmission element of the belt tensioner of this belt retractor has a bending portion provided at the rear end of the load transmission element (as viewed in the tensioning direction). The bending portion is formed to be pressure-resistant in the longitudinal direction of the load transmission element but flexible in a direction perpendicular to the longitudinal direction. The bending portion corresponds to that portion of the load transmission element which during force limitation is pushed back into the tubular housing. Thus, the force-limiting operation is not or merely slightly influenced by the belt tensioner.

It is an object of the invention to provide a reliable decoupling of the load transmission element from the pinion after the belt tensioning phase so as not to impede a subsequent load limiting phase.

This problem is solved by a belt retractor according to claim 1. Advantageous and expedient embodiments of the belt retractor according to the invention are recited in the corresponding dependent claims.

The invention provides a belt retractor for a vehicle safety belt system comprising a belt tensioner for tensioning a safety belt during a tensioning phase, and a load limiter for limiting the load applied by the belt on a vehicle occupant during a load limiting phase after the tensioning phase. The belt tensioner includes a belt reel, a toothed pinion, a drive unit and an elongated load transmission element. The pinion is coupled to the belt reel. According to the invention, the load transmission element has a first portion exposing a plastically deformable material and a second portion exposing an elastically deformable material.

The invention makes use of the finding that the load transmission element forces the pinion to rotate only as long as the teeth of the pinion engage the load transmission element in a force transmitting manner. This is the case when the pinion teeth cut into the first portion of the load transmission element, i. e. when the load transmission element is plastically deformed. Insofar the belt tensioning phase is similar to known techniques. However, according to the invention, the load transmission element includes a second portion that exposes an elastically deformable material. In contrast to the plastically deformable material of the first portion the elastically deformable material of the second portion is compressible. This means that the teeth of the pinion do not cut into the material of the second portion but compress the elastic material temporarily. In accordance with this inventive concept the load transmission element can be designed such that the first portion is engages the pinion to rotate the pinion and the belt wheel in a winding direction only during the belt tensioning phase, while the pinion comes into contact with the second portion at the end of the belt tensioning phase and/or during the subsequent load limiting phase. It is to be understood that at the end of the belt tensioning phase the pinion is only slowly rotating or not rotating at all anymore because the belt reel cannot wind up any more belt webbing, resulting in an significant force acting in the belt webbing. Yet the load transmission element can still move forward, following inertia, without transferring any significant force to the pinion. In effect, the forcibly stopped teeth of the pinion simply compress the elastic material of the second portion of the load transmission element so that the forward movement of the load transmission element can continue. Likewise, when the forward movement of the load transmission element has stopped and the second portion of the load transmission element is in contact with the teeth of the pinion, rotation of the pinion in the unwinding direction during the load limiting phase is not significantly impeded, either.

In the preferred embodiment of the invention, the length of the first portion of the load transmission element is significantly greater than the length of the second portion. This length proportion takes into account that a certain length of the load transmission element is necessary to complete the belt tensioning. For example, the length of the second portion is between 20% and 50% of the total length of the transmission element.

Preferably, the diameters of the first and second portions are about the same. The first and second portions should not significantly differ in thickness in order to ensure that both portions of the load transmission element overlap with the teeth of the pinion. It is to be understood that a free rotation of the pinion may not be desired during the transition from the belt tensioning phase to the load limiting phase in order to ensure a quick blocking of the belt reel. In accordance with this aspect, the second portion of the load transmission element should be in contact with the teeth of the pinion during the transition phase.

The invention also provides a method of using a belt retractor as defined before. During the belt tensioning phase the drive unit moves the load transmission element in a tensioning direction so that the first portion of the load transmission element engages the teeth of the pinion so as to rotate the pinion and the belt reel in a winding direction before the second portion of the load transmission element comes into contact with the teeth of the pinion. During the subsequent load limiting phase the belt reel rotates the pinion in an unwinding direction opposite to the winding direction while the second portion of the load transmission element is in contact with the teeth of the pinion.

As described before, only the first portion of the load transmission element exposing the plastically deformable material forces the pinion and the belt reel to rotate in the winding direction, while the second portion exposing the elastically deformable material allows that the load transmission element can keep moving forward and ensures that during the load limiting phase there is no significant load transfer between the load transmission element and the pinion.

According to the basic principle of the invention, it is advantageous that at the end of the belt tensioning phase and/or during the load limiting phase the teeth of the pinion are not in engagement with the first portion but in contact with the second portion of the load transmission element.

Further features and advantages of the invention will become apparent from the following description and from the accompanying drawings to which reference is made. In the drawings:
- Figure 1 shows an exploded view of a belt retractor according to the invention;
- Figure 2 shows a sectional view of the assembled belt retractor;
- Figure 3 shows a lateral view of the load transmission element of the belt retractor before assembly; and
- Figure 4 shows a schematic partial section of the belt tensioner of the belt retractor of Figure 1.

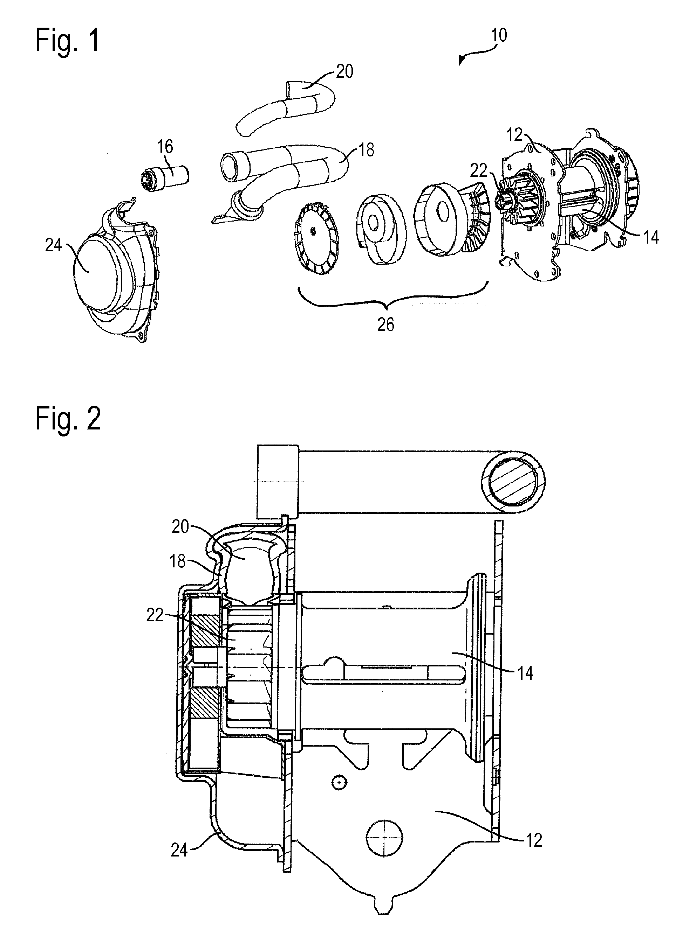

In Figure 1 the substantial component parts of an example embodiment of a belt retractor 10 comprising a pyrotechnically driven belt tensioner are shown. In Figure 2 the belt retractor is illustrated in the assembled state. The belt retractor 10 comprises a frame 12 supporting a rotatable belt reel 14 onto which a safety belt can be wound. Furthermore, the belt retractor 10 includes a force-limiting mechanism (load limiter) not shown here in detail.

The belt tensioner of the belt retractor 10 includes a pyrotechnic drive unit 16, a tensioner tube 18 having a bent tubular portion, a load transmission element 20 disposed in the tensioner tube 18 as well as a toothed pinion 22 coupled to the belt reel 14. The component parts of the belt tensioner are jointly arranged in a tensioner housing 24. In Figure 1 furthermore the retracting mechanism 26 of the belt retractor 10 is shown. This mechanism is not important to the function of the belt tensioner and the load limiter so that it is not explained in detail.

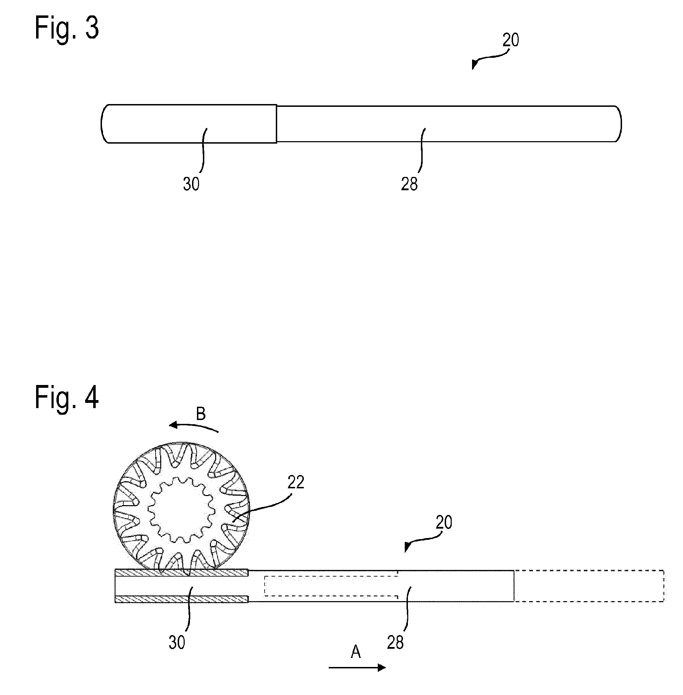

Figure 3 shows the load transmission element 20 of the belt tensioner in detail before it is inserted in the tensioner tube 18. The load transmission element 20 has a first elongated portion 28 exposing a plastically deformable material and a second portion 30 exposing an elastically deformable material. "Exposing" means that at least a significant radially outer portion of the first and second portions 28, 30 that become engaged or come into contact with the pinion 22 are made of a plastically deformable material and an elastically deformable material, respectively.

The first portion 28 of the load transmission element can be considered as the front portion since it comes into contact with the pinion 22 first when the belt tensioner is activated. Accordingly, the second portion 30 can be considered as the rear portion. The length of the first portion 28 is significantly greater than the length of the second portion 30, while the diameters of the first and second portions 28, 30 are roughly the same.

For tensioning the safety belt the pyrotechnic drive unit 16 is activated, thereby generating excessive pressure in the tensioner tube 18. In this way the load transmission element 20 is pressurized in the tensioner tube 18 and moved forward in a tensioning direction A away from the drive unit 16 so that the load transmission element 20, more particularly the first portion 28 thereof, engages in the pinion 22. Upon further movement of the load transmission element 20 in the tensioning direction A the pinion 22 is rotated forcibly by the first portion 28 of the load transmission element 20 in a winding direction B. The belt reel 14 coupled to the pinion 22 is rotated with the latter so that the safety belt is wound onto the belt reel 14 and thus belt tensioning is effectuated.

During this belt tensioning phase the teeth of the pinion 22 cut into the plastically deformable material of the first portion 28 of the load transmission element 20. This is due to the overlap of the free ends of the pinion teeth and the load transmission element 20. In other words: the load transmission element 20 is guided and supported such that it cannot escape the pinion 22 in a direction perpendicular to the tensioning direction A, especially not in a radial direction with respect to the pinion 22. Accordingly, the first portion 28 of the load transmission element 20 forces rotation of the pinion 22 in the winding direction B.

At the end of the belt tensioning phase the safety belt is tensioned and the belt webbing stress significantly increases, i. e. rotation of the belt reel 14 and the pinion 22 in the winding direction is either almost or completely stopped because (almost) no webbing can be wound up on the belt reel 14 anymore. Yet the load transmission element 20 keeps moving in the tensioning direction A due to inertia. However, in this situation, which is shown in Figure 4, the teeth of the pinion 22 are not in engagement with the first portion 28 of the load transmission element 20 anymore. Rather, the pinion teeth are in contact with the second portion 30. Since the second portion 30 exposes an elastically deformable material, the pinion teeth do not cut into the load transmission element 20 but simply compress the elastic material of the second portion 30. Thus, the second portion 30 can slip through without forcing the pinion 22 to further rotate in the winding direction B.

During a force-limiting operation following the belt tensioning, a limited rotation of the belt reel 14 opposite the winding direction B is allowed so as to prevent the load acting on the vehicle occupant from increasing excessively. By rotation of the belt reel 14 against the winding direction B the load transmission element 20 does not provide a significant resistance since it is the second portion 30 exposing the elastically deformable material that is in contact with the teeth of the pinion 22.

### List of Reference Signs

- 10: belt retractor
- 12: frame
- 14: belt reel
- 16: drive unit
- 18: tensioner tube
- 20: load transmission element
- 22: pinion
- 24: tensioner housing
- 26: retracting mechanism
- 28: first portion of load transmission element
- 30: second portion of load transmission element
- A: tensioning direction
- B: winding direction

## Claims

1. A belt retractor (10) for a vehicle safety belt system, the belt retractor (10) comprising a belt tensioner for tensioning a safety belt during a tensioning phase, and a load limiter for limiting the load applied by the safety belt on a vehicle occupant during a load limiting phase after the tensioning phase,
the belt tensioner including a belt reel (14), a toothed pinion (22), a drive unit (16) and an elongated load transmission element (20),
the pinion (22) being coupled to the belt reel (14),
the load transmission element (22) having a first portion (28) exposing a plastically deformable material and a second portion (30) exposing an elastically deformable material.

2. The belt retractor (10) according to claim 1, **characterized in that** the length of the first portion (28) is significantly greater than the length of the second portion (30).

3. The belt retractor (10) according to claim 1 or 2, **characterized in that** the diameters of the first and second portions (28, 30) are about the same.

4. A method of using a belt retractor (10) according to one of the preceding claims,
wherein during the belt tensioning phase the drive unit (16) moves the load transmission element (20) in a tensioning direction (A) so that the first portion (28) of the load transmission element (20) engages the teeth of the pinion (22) so as to rotate the pinion (22) and the belt reel (14) in a winding direction (B) before the second portion (30) of the load transmission element (20) comes into contact with the teeth of the pinion (22), and
wherein during the load limiting phase the belt reel (14) rotates the pinion (22) in an unwinding direction opposite to the winding direction (B) while the second portion (30) of the load transmission element (20) is in contact with the teeth of the pinion (22).

5. The method according to claim 4, **characterized in that** at the end of the belt tensioning phase and/or during the load limiting phase the teeth of the pinion (22) are in contact with the second portion (30) of the load transmission element (20).
